# EUROPEAN PATENT APPLICATION

(11) **EP 1 515 210 A2**
(43) Date of publication of application: **16.03.2005**
(21) Application number: 04250986.9
(22) Date of filing: 24.02.2004
(51) Int. Cl.: G05D 1/02

(54) **Robot system and control method thereof**

(30) Priority: 01.08.2003 KR 2003053377
(71) Applicant: Samsung Electronics Co., Ltd., Suwon-si, Gyeonggi-do (KR)
(72) Inventor: Koh, Won-jun, Suwon city Kyungki-do (KR); Park, Ki-cheol, Taean-eup Hwasung city Kyungki-do (KR); Kim, Yong-jae, Kangnam-ku Seoul City (KR); Oh, Yeon-taek, Suji-eup Yongin city Kyungki-do (KR)
(74) Representative: Robinson, Ian Michael

(57) **Abstract**

A robot system includes a mobile robot with a driving part (10) to move. The robot system includes a light commander (20) to emit light and give a command corresponding to a reflecting position at which the light is reflected. The robot system also includes a position detector (30) to receive information on the reflecting position as an image, and to detect the reflecting position, and a controller (50) to determine a reflecting trace based on the reflecting position detected by the position detector (30), and to output the reflecting trace to the driving part (10) to control the driving part (10). Thus, the robot system and a control method thereof, has reduced costs, and is easy and safely operated, and immediate operation teaching is possible without a compensating process.

## Description

The present invention relates to a robot system and a control method thereof, and more particularly, to a robot system and a control method thereof, in which a light generator is used to command or teach a mobile robot.

Generally, there has been two types of methods of commanding or teaching a mobile robot to move along a working path, which are a teaching pendent method and an off-line program method.

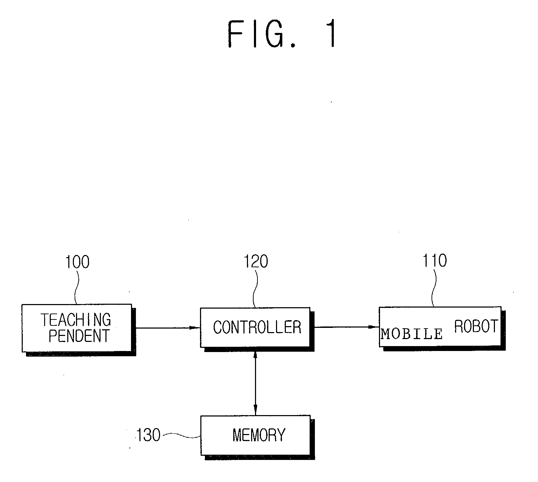

Figure 1 is a block diagram of a teaching pendent system to describe a conventional teaching pendent method. As shown in Figure 1, the teaching pendent system includes a teaching pendent 100, a mobile robot 110, a controller 120, and a memory 130.

The teaching pendent 100 receives information on a moving path, etc. for a mobile robot 110 inputted by an operator through a keyboard, and transmits the information to the controller 120. The controller 120 controls the mobile robot 110 to operate according to the received information, and stores the operation in the memory 130.

An operator makes a detailed plan for a partial moving path and the operation for the mobile robot 110 from a robot's point of view, and then controls the mobile robot 110 to move by using buttons provided in the teaching pendent 100. When the mobile robot 110 reaches a desired teaching point along a desired trace, the operator stores performed serial operations and its respective positions in the memory 130. Then, the operator repeatedly performs making the plan for the operation, controlling the mobile robot 110, and storing the operation until the operation related to a whole moving path is stored. Then, the stored operation of the mobile robot 110 is tested. In the case where the test result is in accordance with the plan made by the operator, the mobile robot 110 will be used, and is controlled based on the stored operation.

In the teaching pendent method, necessary operations of the mobile robot 110 are repeatedly inputted by a remote controller called the teaching pendent 100 and then practically tested in every case. In the off-line program method, detailed operations are programmed by an operator with a graphic or a text, and then tested through simulation, thereby applying the programmed operations to the mobile robot.

In the off-line program method, an operator makes a plan for the operations for the mobile robot from the robot's view, and programs serial operations and its respective positions for the mobile robot with the graphic or the text.

The programmed operations are displayed into the simulations, so that the operator makes crosschecks between the simulations and the plan. In the case where the plan is not in accordance with the simulation, the operator modifies the plan and repeats the simulation until the plan is in accordance with the simulation. In the case where the plan is in accordance with the simulation, simulation information is uploaded to the controller of the mobile robot, and then practically tested in the mobile robot.

When a practical position due to the practical test is different from an ideal position based on the simulation, the difference is compensated. Oppositely, when the practical position is in accordance with the ideal position, the mobile robot will be used, and is controlled based on the programmed operation.

However, in the conventional teaching pendent method, the operations for the mobile robot are practically tested to teach the mobile robot such that it is not safe and it takes too much time to teach the mobile robot. Further, it is impossible to partially modify the teaching method operation, and it becomes inconvenient to change the operation of the mobile robot.

Further, the off-line program method requires an expensive computer system and an expensive program. Further, the compensating process is needed to compensate the difference between the ideal position based on the simulation and the practical position. Thus, the off-line program method becomes complicated, and it is difficult to immediately teach the mobile robot.

An aim of the present invention is to provide an inexpensive robot system and a control method thereof, in which immediate operation teaching is possible and a user may easily operate a robot.

Other aims and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In one aspect of the present invention there is provided a robot system including a mobile robot with a driving part to move. The robot system includes a light commander to emit light and give a command to correspond to a reflecting position at which the light is reflected. The robot system also includes a position detector to receive information on the reflecting position as an image, and to detect the reflecting position. The robot system includes a controller to determine a reflecting trace based on a plurality of reflecting positions detected by the position detector, and to output the reflecting trace to the driving part to control the driving part.

According to an aspect of the invention, the robot system further includes a memory to store commands, and command patterns formed by the reflecting positions which correspond to the commands. The controller determines whether the reflecting trace based on the reflecting positions is in accordance with the command patterns corresponding to the commands stored in the memory, and outputs the command to the driving part when the reflecting trace is in accordance with the command patterns.

According to an aspect of the invention, the light commander includes a laser pointer to point at a point in a three dimensional space by using a laser beam.

According to an aspect of the invention, the position detector includes an optical device to detect the reflecting position at which the light emitted from the light commander is reflected.

Also according to the present invention there is provided a method of controlling a robot system including a mobile robot with a driving part to move. The method includes providing a light commander to emit light and give commands to correspond to a reflecting position at which the light is reflected. The method also includes providing a memory to store the command, and command pattern formed by the reflecting position which corresponds to the commands, and detecting the reflecting positions by the light from the light commander at a predetermined time interval. The method includes determining a reflecting trace based on the reflecting position when an interval change between a first and second reflecting position is within a predetermined interval, determining whether the reflecting trace is in accordance with the command patterns, and controlling the mobile robot to operate according to the commands corresponding to the command patterns when the reflecting trace is in accordance with the command patterns.

According to an aspect of the invention, when the reflecting trace is not in accordance with the command patterns and draws a line segment, the mobile robot is controlled to move along the line segment.

According to an aspect of the invention, when the reflecting trace is not in accordance with the command patterns and draws a closed loop, the mobile robot is controlled to enter an area formed by the closed loop.

According to an aspect of the invention, when the reflecting trace is not in accordance with the command pattern and points to a point, the mobile robot is controlled to move to the point.

According to an aspect of the invention, a plurality of reflecting traces corresponding to several controls are stored as one command pattern in the memory.

For a better understanding of the invention, and to show how embodiments of the same may be carried into effect, reference will now be made, by way of example, to the accompanying diagrammatic drawings in which:
Figure 1 is a block diagram of a teaching pendent system to describe a conventional teaching pendent method;
Figure 2 is a block diagram of a robot system, according to an embodiment of the present invention;
Figure 3 is a control flowchart of the robot system of Figure 2;
Figure 4 illustrates a reflecting trace in accordance with a command pattern;
Figure 5 illustrates the reflecting trace drawing a line segment; and
Figure 6 illustrates the reflecting trace drawing a closed loop.

Reference will now be made in detail to the embodiments of the present invention, examples of which are illustrated in the accompanying drawings, wherein like reference numerals refer to the like elements throughout. The embodiments are described below to explain the present invention by referring to the figures.

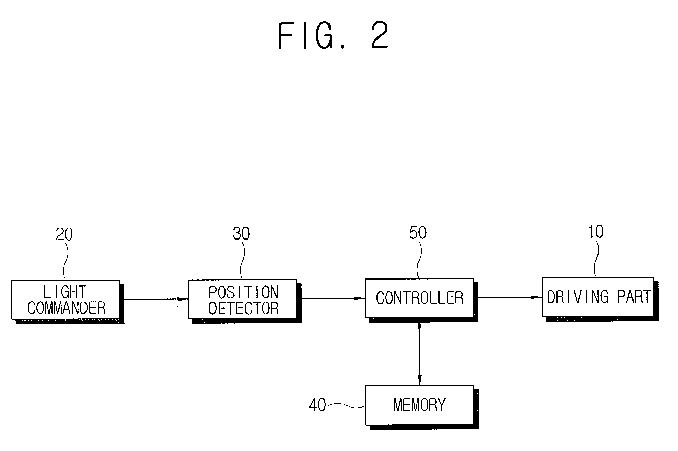

Figure 2 is a block diagram of a robot system, according to an embodiment of the present invention. As shown in Figure 2, a robot system includes a driving part 10, a light commander 20, a position detector 30, a memory 40, and a controller 50.

The driving part 10 is provided in a mobile robot, and includes mechanical components to drive the mobile robot to move. The driving part 10 receives commands on direction and speed for the mobile robot from a controller 50.

The light commander 20 emits light and gives a command for the mobile robot which corresponds to a reflecting position at which the light is reflected. That is, an operator inputs a target position, a moving trace, and a command pattern of the mobile robot through the light commander 20. Here, any light may be used as the light, which travels in a straight line and is reflected so as to be input to the position detector 30 of the mobile robot.

The position detector 30 detects a teaching position by receiving information on the reflecting position at which the light emitted from the light commander 20 is reflected, and outputs it to the controller 50. Here, the position detector 30 includes a position receiving part to receive the information of the teaching position (that is, the reflecting position taught by the light commander 20), and the position receiving part may vary according to a characteristic of the light used for the light commander 20. For example, when a laser beam is used as the light, an optical device may be used as the position receiving part. Thus, the optical device receives the information on the reflecting position as an image, and calculates coordinates of the teaching position relative to the mobile robot through a predetermined processor, thereby outputting the coordinates to the controller 50.

The controller 50 determines a reflecting trace drawn through the coordinates of the reflecting positions detected by the position detector 30, and transmits the reflecting trace to the driving part 10, thereby controlling the driving part 10.

The memory 40 previously stores the commands and command patterns formed by the reflecting positions which correspond to the commands. The controller 50 determines whether the reflecting trace based on the reflecting positions detected by the position detector 30 is in accordance with a command pattern corresponding to the commands stored in the memory 40. When the reflecting trace is in accordance with the command pattern, the controller 50 transmits a command corresponding to the command pattern to the driving part 10, thereby controlling the driving part 10.

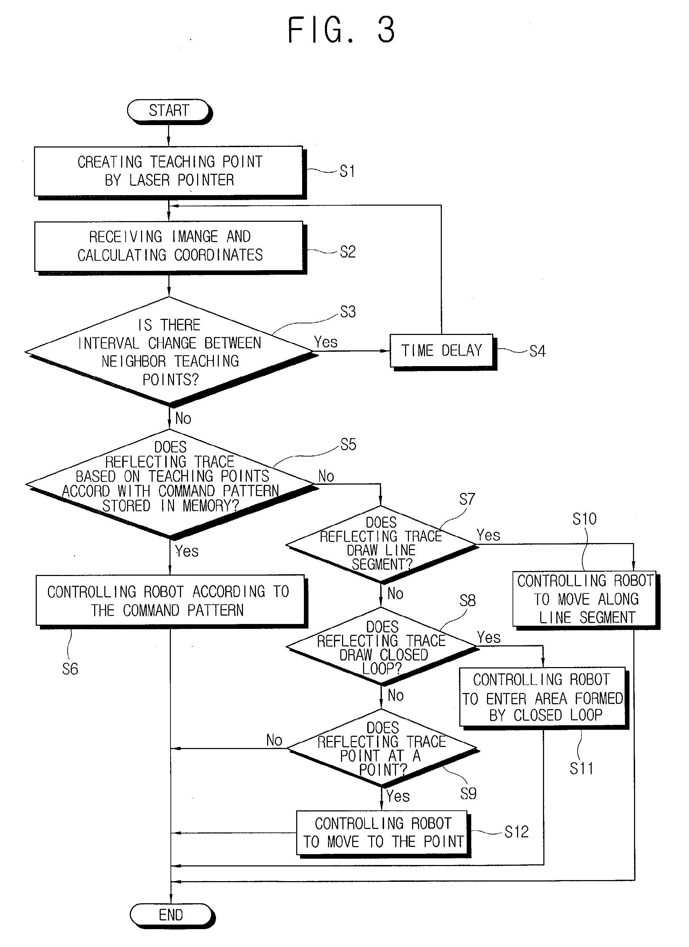

Figure 3 is a control flowchart of the robot system of Figure 2. At operation S1, an operator creates the teaching position by pointing at a predetermined position through a laser pointer used as the light commander 20. At operation S2, the optical device mounted in the mobile robot receives the teaching position taught by the light commander 20 as an image, and calculates the coordinates of the teaching position relative to the mobile robot with an image processor.

At operation S3, the controller 50 compares the coordinates of a present teaching position detected by the position detector 30 with coordinates of a former teaching position, and determines whether or not there is a predetermined interval between the present teaching position and the former teaching position.

When an interval between the present and former teaching positions is larger than the predetermined interval, it is determined that the teaching position will be continuously created. At operation S4, an operator is admitted to take delay time to create a following teaching position, and then returns to the operation S2, thereby allowing the position detector 30 to detect the following teaching position.

When an interval between the present and former teaching positions is smaller than the predetermined interval, it is determined that the teaching positions are not created by an operator anymore, and all detected teaching positions will be analyzed. At operation S5, the controller 50 first determines the reflecting trace drawn via the teaching positions and then determines whether or not the reflecting trace is in accordance with a command pattern previously stored in the memory 40.

When the reflecting trace is in accordance with the command pattern, at operation S6, the controller 50 gives a command to correspond to the command pattern.

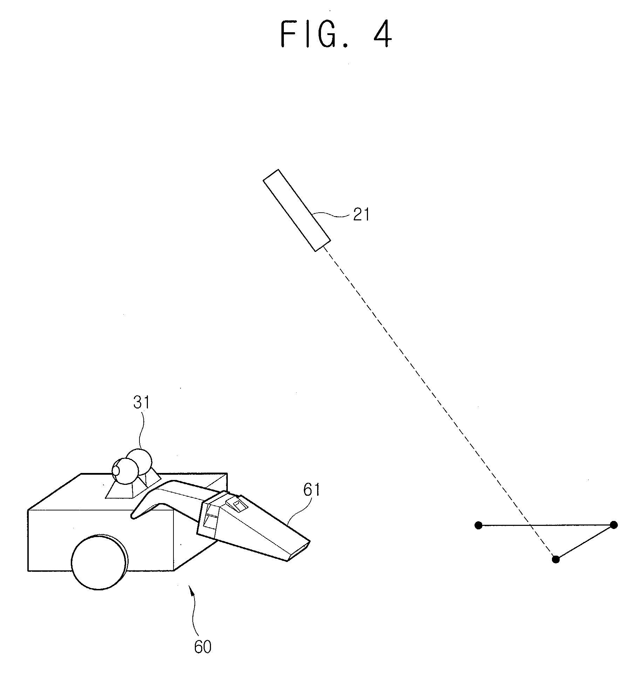

Figure 4 illustrates a reflecting trace in accordance with a command pattern. As shown in Figure 4, a mobile robot 60 includes a driving part 10, an optical device 31, and a cleaner 61.

The driving part 10 includes mechanical components such as a motor, a motor driving circuit, a driving shaft, and wheels to move the mobile robot 60. The optical device 31 receives teaching position pointed by a laser pointer 21 as an image. The cleaner 61 performs cleaning along a specified moving path.

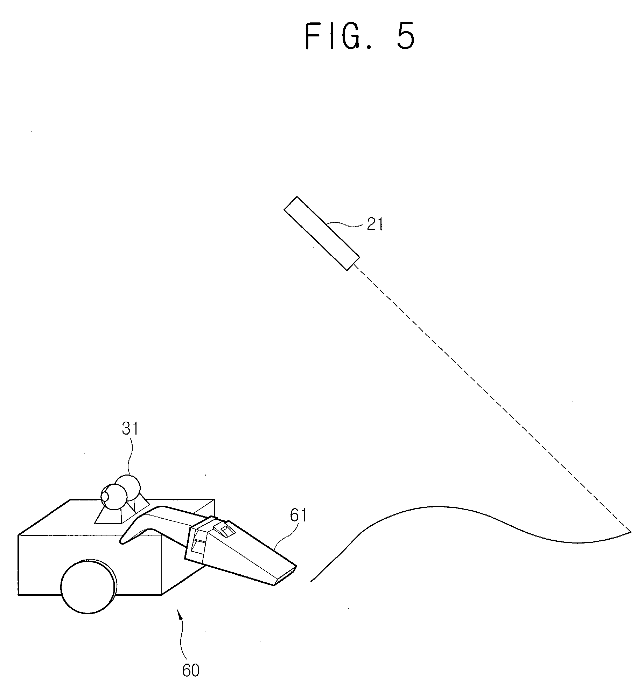

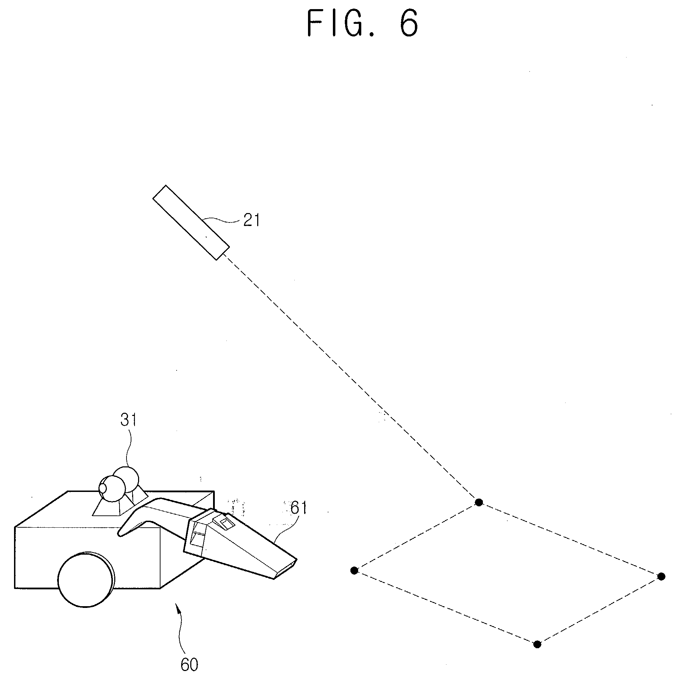

The mobile robot 60 and the laser pointer 21 shown in Figure 4 are identical to those in Figures 5 and 6, so that repetitive descriptions thereof are omitted.

If the command pattern has a "V"-shape and the command corresponding to the "V"-shaped command pattern request that the mobile robot 60 move forward in a straight line, when the reflecting trace draws a "V"-shape as shown in Figure 4, the controller 50 controls the driving part 10 to drive the mobile robot 60 to move forward in the straight line. At this time, the mobile robot 60 may clean while moving.

When the reflecting trace is not in accordance with the command pattern, the mobile robot 60 is controlled according to the commands based on patterns of the reflecting trace.

When the reflecting trace is not in accordance with the command pattern, at operation S7, it is determined whether the reflecting trace is a line segment. When the reflecting trace is not the line segment, at operation S8, it is determined whether the reflecting trace is a closed loop. When the reflecting trace is not the closed loop, at operation S9, it is determined whether the reflecting trace is a point.

When the reflecting trace draws the line segment, at operation S10, the controller 50 controls the driving part 10 to drive the mobile robot 60 to move along the line segment.

Figure 5 illustrates that the reflecting trace draws the line segment. Particularly, when the reflecting trace draws an "S"-shaped curve, the controller 50 controls the mobile robot 60 to move along the "S"-shaped curve. When the reflecting trace draws the closed loop, at operation S11, the controller 50 controls the driving part 10 to drive the mobile robot 60 to enter an area formed by the closed loop.

Figure 6 illustrates that the reflecting trace draws the closed loop. As shown in Figure 6, when the mobile robot 60 includes the cleaner 61 and an area needed to clean is specified and taught, the controller 50 controls the mobile robot 60 to enter the specified area and to clean the area.

When the reflecting trace is a point, at operation S12, the controller 50 controls the driving part 10 to drive the mobile robot 60 to move to the point. The controller 50 may give one command by combining the several patterns of the reflecting traces, and store the pattern combination as the coordinates, thereby controlling the mobile robot 60.

As described above, the present invention provides a robot system and a control method thereof, in which cost reduction, and easy and safe operation are provided. Thus, immediate operation teaching is possible without a compensating process.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A robot system comprising a mobile robot with a driving part (10) to move, the robot system comprising:
a light commander (20) to emit light and give a command to correspond to a reflecting position at which the light is reflected;
a position detector (30) to receive information on the reflecting position as an image, and to detect the reflecting position; and
a controller (50) to determine a reflecting trace based on the reflecting position detected by the position detector (30), and to output the reflecting trace to the driving part (10) to control the driving part (10).

2. The robot system according to claim 1, further comprising:
a memory (40) to store the command, and a command pattern formed by the reflecting which corresponds to the command, wherein the controller (50) determines whether the reflecting trace based on the reflecting position is in accordance with the command pattern corresponding to the command stored in the memory (40), and outputs the command to the driving part (10) when the reflecting trace is in accordance with the command pattern.

3. The robot system according to claim 1 or 2, wherein the light commander (20) comprises a laser pointer (21) to point at a point in a three dimensional space by using a laser beam.

4. The robot system according to any preceding claim, wherein the position detector (30) comprises:
an optical device (31) to detect the reflecting position at which the light emitted from the light commander (20) is reflected.

5. The robot system according to claim 4, wherein the optical device (31) comprises:
an image processor to calculate coordinates of the reflecting position relative to the mobile robot.

6. The robot system according to any preceding claim, wherein the mobile robot comprises a cleaner (61).

7. The robot system according to claim 6, wherein the position detector (30) receives a teaching position pointed by the light commander (20) and the controller (50) controls the mobile robot to enter a specified area and to clean the area.

8. A method of controlling a robot system comprising a mobile robot with a driving part (10) to move, the method comprising:
providing a light commander (20) to emit light and give a command corresponding to a reflecting position at which the light is reflected;
providing a memory (40) to store the command, and command pattern formed by the reflecting which corresponds to the command;
detecting the reflecting position by the light from the light commander (20) at a predetermined time interval;
determining a reflecting trace based on the reflecting position when a interval change between a first and second reflecting position is within a predetermined interval;
determining whether the reflecting trace is in accordance with the command pattern; and
controlling the mobile robot to operate according to the command corresponding to the command pattern when the reflecting trace is in accordance with the command pattern.

9. The method according to claim 8, wherein when the reflecting trace is not in accordance with the command pattern and draws a line segment, the mobile robot is controlled to move along the line segment.

10. The method according to claim 8 or 9, wherein when the reflecting trace is not in accordance with the command pattern and draws a closed loop, the mobile robot is controlled to enter an area formed by the closed loop.

11. The method according to claim 8, 9 or 10, wherein when the reflecting trace is not in accordance with the command pattern and points to a point, the mobile robot is controlled to move to the point.

12. The method according to claim 10, wherein a plurality of reflecting traces corresponding to a plurality of command patterns are combined and stored as a single command pattern in the memory (40).

13. A robot system including a mobile robot with a driving part (10) to move, comprising:
a light commander (20) to emit light and give a command to correspond to a reflecting position at which the light is reflected;
a position detector (30) to receive and detect information on the reflecting position; and
a controller (50) to determine a reflecting trace based on the reflecting position, controlling the driving part (10) according to the reflecting trace.
